# EUROPÄISCHE PATENTSCHRIFT

(11) **EP 4 070 997 B1**
(45) Veröffentlichungstag und Bekanntmachung des Hinweises auf die Patenterteilung: **20.05.2026**
(21) Anmeldenummer: 22163724.2
(22) Anmeldetag: 23.03.2022
(51) Int. Cl.: B60R 1/06

(54) **INDIREKTES RÜCKSICHTSYSTEM MIT BEIDERSEITS EINER TRENNFLÄCHE VORHANDENEN KONTAKTBEREICHEN EINES TRAGELEMENTS, LASTOPTIMIERTE VERSTELLKUGEL UND MONTAGEVERFAHREN FÜR EIN INDIREKTES RÜCKSICHTSYSTEM**
INDIRECT REAR VIEW SYSTEM WITH CONTACT AREAS OF A SUPPORT ELEMENT ON BOTH SIDES OF A SEPARATING SURFACE, LOAD OPTIMIZED ADJUSTMENT BALL AND MOUNTING METHOD FOR INDIRECT REAR VIEW SYSTEM
SYSTÈME DE RECUL INDIRECT POURVU DE ZONES DE CONTACT D'UN ÉLÉMENT PORTEUR PRÉSENTES SUR LES DEUX FACES D'UNE ZONE DE SÉPARATION, ROTULE DE RÉGLAGE À CHARGE OPTIMISÉE ET PROCÉDÉ DE MONTAGE D'UN SYSTÈME DE RECUL INDIRECT

(30) Priorität: 06.04.2021 DE 102021108507
(43) Veröffentlichungstag der Anmeldung: 12.10.2022
(73) Patentinhaber: MEKRA Lang GmbH & Co. KG, 91465 Ergersheim (DE)
(72) Erfinder: LANG, Werner Dr., 91465 Ergersheim (DE); FINKENBERGER, Elmar, 91587 Adelshofen (DE); POPP, Albrecht, 91629 Weihenzell (DE)
(74) Vertreter: Winter, Brandl - Partnerschaft mbB

(56) Entgegenhaltungen:
- EP-A2- 2 078 638
- US-A- 2 104 099
- US-A- 2 457 639
- US-A- 2 588 825
- US-A- 2 615 368
- US-B1- 7 108 384

## Beschreibung

Die Erfindung betrifft ein indirektes Rücksichtsystem für ein Kraftfahrzeug gemäß dem Oberbegriff des Anspruchs 1, wie ein Nutzfahrzeug, eine Agrar- / Baumaschine, bspw. einen Traktor, einen Lkw, einen Bus und/oder einen Transporter, mit einem als integrales, einmaterialiges Bauteil ausgebildeten Tragelement zum Befestigen wenigstens eines Reflexionselementes, wie einem Spiegelglas, wobei das Tragelement einen Koppelbereich zum lageveränderbaren Befestigen/Anbringen an einem seinerseits fahrzeuganbindbaren oder fahrzeugangebundenen Verstellelement ausbildet, wobei der Koppelbereich bspw. etwa zentrums-/ mittelpunktsnah des Tragelementes vorhanden ist und zum beispielweise druckbeaufschlagenden, etwa kraftschlusseingehenden und/oder formschlusseingehenden Kontaktieren eines balligen Anschlussbereiches des Verstellelementes, einen ersten Kontaktbereich und einen dazu axial versetzten zweiten Kontaktbereich besitzt, wobei die Axialrichtung durch die Montage- / Füge- / Einsetzrichtung des Verstellelementes in das Tragelement (oder eine Horizontalachse vorzugsweise durch einen Drehpunkt, um den das Tragelement verschwenkbar ist) festgelegt / definiert ist, wobei durch den Bereich eines Übergangs eines Hauptkörpers des Tragelementes in den Koppelbereich des Tragelementes eine gedachte Trennfläche verläuft.

Die Trennfläche verläuft durch den Bereich des Übergangs vom Hauptkörper des Tragelements in den Koppelbereich des Tragelements beiderseits des Drehpunktes. Unterschiedliche räumliche Konfigurationen der Trennfläche sind möglich. Beispielsweise sind Freiflächengestaltungen umsetzbar. Insbesondere kann die Trennfläche plan, also eben, ausgebildet sein und formt in diesem Spezialfall dann eine Trennebene aus.

Aus dem Stand der Technik sind verschiedene Verstelleinheiten bekannt. So geht auf die Anmelderin das deutsche Patent DE 101 63 318 C1 zurück. Dort ist eine Gelenkanordnung geschützt, nämlich eine Gelenkvorrichtung zur Anordnung von zwei Bauteilen im Winkel zueinander, insbesondere für Rückblickspiegel mit verstellbarer Spiegelscheibe, mit einem ersten Gelenkbauteil mit einer Kugelpfanne, einem zweiten Gelenkbauteil, das einen im wesentlichen kugelabschnittsförmigen Vorsprung aufweist, der in die Kugelpfanne eingepasst ist, einem Gleitteil, und einer Verbindungseinrichtung zum Herstellen einer Klemmverbindung zwischen erstem Gelenkbauteil, Gleitteil und zweitem Gelenkbauteil, wobei die einander zugewandten Seiten von Kugelpfanne, Gleitteil und Vorsprung jeweils eine konvexe Strukturierung und eine hierzu komplementär ausgebildete konkave Strukturierung aufweisen, wobei durch die Strukturierungen eine erste und eine zweite Drehachse zwischen Gleitteil, Kugelpfanne und Vorsprung festgelegt wird. Als Besonders ist herausgestellt, dass die konkave Strukturierung zumindest in entlastetem Zustand stärker gekrümmt ist als die konvexe Strukturierung.

Auf die Anmelderin geht auch das Europäische Patent EP 3 335 938 B1 zurück. In diesem Patent ist eine Kugelgelenkvorrichtung zur verstellbaren Anordnung von einem ersten und einem zweiten Gelenkbauteil um einen Drehpunkt geschützt. Dabei besitzt die patentierte Kugelgelenkvorrichtung ein Kugelflächenelement, an dem ersten Gelenkbauteil mit einer Außenseite, die Teil einer Kugelfläche ist und einen ersten Krümmungsradius mit einem ersten Mittelpunkt aufweist. Eine Eingriffseinrichtung an dem zweiten Gelenkbauteil, die das Kugelflächenelement mit einer ersten Kontaktfläche kontaktiert, ist ebenfalls vorhanden. Auch weist jene Vorrichtung eine innerhalb des Kugelflächenelementes angeordnete, konkave kugelkappenförmige Aufnahme an dem ersten oder zweiten Gelenkbauteil auf, die einen zweiten Krümmungsradius mit einem zweiten Mittelpunkt besitzt. Das zweite oder erste Gelenkbauteil weist eine konkave Kugelkappe auf. Das zweite oder erste Gelenkbauteil weist eine konvexe Kugelkappe auf, die sich mit einer zweiten Kontaktfläche in der kugelkappenförmigen Aufnahme abstützt. Dabei ist der erste Krümmungsradius größer als der zweite Krümmungsradius. Die Einsatzeinrichtung übergreift das Kugelflächenelement und die beiden Gelenkbauteile nach Art einer Druckknopfverbindung miteinander. Als Besonders ist in jenem älteren Patent unter Schutz gestellt, dass das Kugelflächenelement abschnittsweise kugelringförmig ausgebildet ist, und dass das Kugelflächenelement mehrere über den Umfang verteilte kugelringförmige Abschnitte aufweist.

Weiterer Stand der Technik ist aus der US 2 588 825 A, der US 2 457 639 A, der US 7 108 384 B1, der EP 2 078 638 A2, der US 2 615 368 A und der US 2 104 099 A bekannt.

Es ist die Aufgabe der vorliegenden Erfindung, die aus dem Stand der Technik bekannten Nachteile zu mildern oder bestenfalls abzustellen.

Diese Aufgabe wird bei einem gattungsgemäßen indirekten Rücksichtsystem erfindungsgemäß durch die Merkmale des kennzeichnenden Teils des Anspruchs 1 gelöst, womit enthalten ist, dass der erste Kontaktbereich auf der einen Seite der gedachten Trennfläche angeordnet ist und der zweite Kontaktbereich auf der gegenüberliegenden anderen Seite der gedachten Trennfläche angeordnet ist.

Auf diese Weise wird ein indirektes Rücksichtsystem / Sichtsystem für ein Fahrzeug bereitgestellt, welches einen robusten und kompakten Verstellmechanismus aufweist. Ein besonders günstiger Kraftflussverlauf von den Wirkflächen der Verstellung des Tragelementes und des Gesamtbauteils (Tragelement) wird geschaffen. Die Lastverteilung wird optimiert. Spannungsspitzen bzw. Überlast werden vermieden. Dadurch werden Beschädigungs- und/oder Versagensfälle ausgeschlossen.

Mit anderen Worten wird ein besonders lastoptimiertes indirektes Sichtsystem für ein Fahrzeug vorgestellt, umfassend / bestehend aus wenigstens einem Reflexionselement zur indirekten Sicht, einem Tragelement und einem Verstellelement, wobei das Tragelement das Reflexionselement aufnimmt und einen Kontaktbereich mit Wirkflächen zum Verstellelement aufweist, wobei das Verstellelement einen direkten oder indirekten Anbindebereich, d. h. mit oder ohne weiteren Zwischenteilen, zum Fahrzeug aufweist und zusätzliche Wirkflächen zum Tragelement aufweist, wobei das Tragelement und das Verstellelement mittels der jeweiligen Kontaktbereiche zueinander über einen Drehpunkt verschwenkbar / schwenkbar sind, wobei das Besondere gerade darin zu sehen ist, dass das Tragelement eine Rückwand, welche hinter dem Reflexionselement angeordnet ist, aufweist, die den Kontaktbereich in einen inneren Kontaktbereich und in einen äußeren Kontaktbereich teilt, wobei der innere Kontaktbereich zwischen der Rückwand und dem Reflexionselement angeordnet ist, und wobei der äußere Kontaktbereich in Richtung des Anbindebereiches verlagert angeordnet ist. Der innere Kontaktbereich kragt vom äußeren Kontaktbereich grundsätzlich weg und vorzugsweise exakt / ungefähr in Richtung des Reflexionselementes vom Bereich des Übergangs aus gesehen.

Vorteilhafte Ausführungsformen sind in den Unteransprüchen beansprucht und werden nachfolgend näher erläutert.

So ist es von Vorteil, wenn der erste Kontaktbereich als ein innerer Kontaktbereich ausgebildet ist, der im Inneren eines durch das Tragelement und dem Reflexionselement definierten Raum liegt und der zweite Kontaktbereich als ein äußerer Kontaktbereich ausgebildet ist. Ein Aufteilen des Kraftflusses vom Bereich des Übergangs des Hauptkörpers des Tragelementes in den Koppelbereich des Tragelementes in zwei unterschiedliche, vorzugsweise entgegengesetzte Richtungen, ist dann die Folge. Der Gesamtkraftfluss wird nun möglichst gleichmäßig verteilt, was einen Bruch des Tragelementes vermeidet und ein besseres Halten des Tragelementes an dem balligen Anschlussbereich des Verstellelementes hervorruft.

Dadurch, dass der erste Kontaktbereich im Inneren des vom Tragelement und dem Reflexionselement definierten Raumes liegt, ist dieser Kontaktbereich auch vor Schmutz und Verunreinigung geschützt, was einen langfristigen guten sowie reibungsarmen Gebrauch ermöglicht und die Verstellbarkeit auch bei schwierigen Rahmenbedingungen sicherstellt.

Wenn der erste Kontaktbereich und der zweite Kontaktbereich jeweils kugelabschnittsartige Innenkontursegmente besitzen, so ist ein Anpassen eines oder beider Kontaktberieche auf den balligen Anschlussbereich zum Sicherstellen einer guten Verstellbarkeit besonders effizient möglich.

Eine vorteilhafte Ausführungsform ist auch dadurch gekennzeichnet, dass die Innenseite des Koppelbereichs (des Tragelementes) die Außenseite des Anschlussbereiches (des Verstellelementes), so aufeinander abgestimmt sind, dass durch beide Bauteile ein Drehpunkt definiert ist, um den das Tragelement relativ zum Verstellelement verschwenkbar ist. Im Einsatz des Rücksichtsystems kann dann vom Nutzer eine bedarfsgerechte Winkelposition der beiden Bauteile zueinander leicht eingestellt werden.

Es ist von Vorteil, wenn der Anschlussbereich kugelabschnittsartige Gegenkontaktbereiche besitzt. Das Verschwenken / Schwenken wird dadurch erleichtert.

Dabei ist es ferner vorteilhaft, wenn die Gegenkontaktbereiche an die mit ihnen in Kontakt stehende Kontaktbereiche, insbesondere bezüglich ihrer Kontur, angepasst sind. Dadurch lassen sich bspw. auch von einer sphärischen Geometrie abweichende Teilbereiche integrieren oder auch ellipsoide Teilbereiche einsetzen.

Wenn die Gegenkontaktbereiche über Abplattungsbereiche bzw. einen Abplattungsbereich verbunden sind, so wird eine Montageerleichterung einerseits und eine Federelemententlastung andererseits sowie eine Vermeidung von Überbestimmung(en) an den Auflageflächen erreicht.

Für die Serienfertigung hat es sich als vorteilhaft herausgestellt, wenn das Tragelement als Rückwand und/oder das Verstellelement als (Dreh-)Zapfen, vorzugsweise aus Kunststoff etwa Polyamid, bspw. als integrales / einstückiges, einmaterialiges Bauteil ausgebildet ist.

Es ist zweckmäßig, wenn das Verstellelement am Tragelement befestigt ist, bspw. über einen Form- und/oder Kraftschluss.

Ein besonders guter Sitz der beiden Bauteile aneinander wird gewährleistet, wenn das Verstellelement eine Aufnahme zum Anschluss eines fahrzeugfesten Halters / Teleskopstangenhalters, Stabes oder (Teleskop-)Rohres besitzt oder entsprechend selbst ausgebildet ist.

Darüber hinaus hat es sich bewährt, wenn die Aufnahme als Sackloch ausgebildet ist, dessen Boden zur Verdrehverunmöglichung stufig ausgeformt ist.

Die Anbringungsmöglichkeiten lassen sich vielseitig gestalten, wenn das Verstellelement einen indirekten oder direkten Anbindebereich zum Fahrzeug besitzt, der bspw. das Sackloch aufweist.

Das Gewicht lässt sich optimieren, wenn die beiden Kontaktbereiche gemeinsam eine kugelabschnittsartige Schale ausbilden, die im Bereich des Übergangs in den Hauptkörper münden.

Der Kompaktheit des Systems ist es zuträglich, wenn ein Winkel α und/oder ein Winkel β von 15° bis 125° +/- 5° vorliegt. Dabei ist es von Vorteil, wenn der Hauptkörper im Bereich des Übergangs in einen Winkel α von 15° bis 125° +/- 5° auf die Schale trifft, vorzugsweise 90° +/- 2,5°, wobei der Winkel α zwischen einerseits einer gedachten Gerade durch den Bereich des Übergangs vom Hauptkörper in den Koppelbereich und andererseits einer in Axialrichtung verlaufenden, gedachten Gerade durch den (Kugel-)Mittelpunkt des Anschlussbereichs und/oder den Drehpunkt aufgespannt ist. Die erste der beiden gedachten Geraden kann in einem speziellen Fall in der Trennfläche liegen, beiderseits welcher der innere und äußere Kontaktbereich angeordnet ist.

Wenn der Hauptkörper in Richtung des Drehpunktes eine gedachte Peillinie vorgibt, die eine theoretische Kugel um den Drehpunkt mit einem Durchmesser von kleiner oder gleich ca. 60 mm, bevorzugt ca. 50 mm, weiter bevorzugt exakt 60 mm schneidet, so ist der Kraftverlauf in Richtung des Zentrums des Anschlussbereichs besonders gut.

Es hat sich auch bewährt, wenn am Tragelement ein Glaselement angebunden ist, etwa mittels eines Form- und/oder Kraftschlusses, insbesondere bspw. mittels einer Clips-Lösung und das Glaselement als Spiegelglas ausgebildet ist.

Eine vorteilhafte Ausführungsform ist auch dadurch gekennzeichnet, dass an (wenigstens / nur) einem der beiden Kontaktbereiche, vorzugsweise dem ersten Kontaktbereich, oder beiden Kontaktbereichen im montierten Zustand eine Federkraft anliegt, die den Koppelbereich zumindest in jeder den Kontaktbereich in Richtung des Koppelbereichs inneren, vorzugsweise in Richtung des Drehpunktes, drängt. Ein Selbstfixieren nach einer Verstellung wird dadurch erleichtert und eine Variabilität zum Erreichen einer guten Wiedergabe des rückwärtigen Sichtbereiches des Fahrers ist die Folge.

Es ist zweckmäßig, wenn die Federkraft durch ein Federelement, wie einen Ring oder eine Klammer gestellt ist. Das Federelement kann eine oder mehrere Windungen besitzen.

Durch ein solch separates Federelement kann die Federkraft gezielt eingestellt werden. Auch hat es sich bewährt, wenn der Ring einen geschlossenen oder offenen, bspw. geschlitzten, Querschnitt besitzt. Die Montage wird dadurch insbesondere im zweiten Fall verbessert und die Dauerfestigkeit / Dauerbelastbarkeit insbesondere im ersten Fall.

Um auch eine lange Lebensdauer mit unveränderten technischen Rahmenbedingungen sicherzustellen, ist es von Vorteil, wenn das Federelement aus einem metallischen Baustoff, etwa aufweisend eine Eisenlegierung, bspw. nach Art von Federstahl, hergestellt / geschaffen ist.

Um einen einfachen modularen Aufbau zu gewährleisten, ist es von Vorteil, wenn das Federelement als Druckfeder ausgebildet ist, die an der Außenseite des ersten Kontaktbereiches oder des zweiten Kontaktbereiches anliegt. Ein nachträgliches Aufbringen wird dadurch auch erleichtert.

Für die Verbindung der Einzelbauteile zueinander, insbesondere um ein Verlieren der Bauteile zu verunmöglichen, ist es von Vorteil, wenn auf der Außenseite des (jeweiligen) Kontaktbereiches eine Vertiefung, etwa nach Art einer Mulde, Rille oder Rinne, ausgebildet ist, in der das Federelement im montierten Zustand ruht / sitzt / angeordnet ist.

Um einen Gleitbereich zwischen dem Tragelement und dem Verstellelement dauerhaft sauber / frei von Verunreinigung zu halten, ist es von Vorteil, wenn zwischen einem der Kontaktbereiche und dem ihm zugeordneten Gegenkontaktbereich, vorzugsweise dem ersten Kontaktbereich und dem ihm zugeordneten Gegenkontaktbereich, mittels dem Tragelement und/oder dem Verstellelement eine Dichtfunktion realisiert ist, bspw. über eine angeformte Dichtlippe an einem oder beiden Bauteile, und/oder ein zusätzliches Dichtelement zwischen dem Tragelement und dem Verstellelement eingebaut / zwischengeschalten ist. Es stellt sich dann eine Reinigungswirkung ein, die in ähnlicher Form auch von einem Augenlied auf einem Auge bekannt ist. Gerade eine aus dem Stand der Technik bekannte Schwachstelle, lässt sich so beseitigen. Eindringende Verschmutzung wird aufgehalten und eine sonst bei der Bewegung der Einzelteile relativ zueinander auftretende Reibung, kann dann nicht mehr zu solch einem ungewünschten Verschleiß führen, welcher sonst immer die Lebensdauer mindert. Es sei auch betont, dass gerade wenn bspw. elastizitätserhöhende Schlitze oder Löcher im Kontaktbereich - vorzugsweise sowieso nur im inneren Kontaktbereich - vorhanden sind, kann dann Verschleiß verhindert werden. Ein relativ dichtes System ist in dieser Ausführungsform die Folge.

Für die Montage ist es von Vorteil, wenn der Koppelbereich ganz oder wenigstens abschnittsweise / teilweise elastisch ausgebildet ist.

Auch ist es von Vorteil, wenn (vorrangig) nur im ersten Kontaktbereich und/oder (nachrangig) nur im zweiten Kontaktbereich Elastizität hervorrufende Geometrieveränderungen, wie Verdünnungen, Schlitze, Freistellungen, Nute, Wellformen und/oder ähnliche Gestaltungen vorhanden sind.

Um unterschiedliche Betriebspositionen vorgeben zu können, ist es von Vorteil, wenn der Koppelbereich und der Anschlussbereich zum Ausbilden einer Indexgeometrie ausgebildet sind, mittels der bestimmte vordefinierte Relativpositionen zwischen dem Tragelement und dem Verstellelement einnehmbar sind.

Dabei ist es von Vorteil, wenn die Indexgeometrie nach Art eines Nut-und-Feder-Ineinandergreifens ausgeformt ist.

Bewährt hat es sich dabei, wenn der Koppelbereich auf seiner Innenseite wenigstens eine Nut / Rinne / Rille oder eine Vielzahl derer besitzt und wobei in wenigstens eine oder mehrere derer (je) als Vorsprung auf der Außenseite des Verstellelementes eingreift oder als Alternative / Ergänzung das Verstellelement auf seiner Außenseite wenigstens eine Nut / Rinne / Rille oder eine Vielzahl derer besitzt und wobei in wenigstens eine Nut / Rinne / Rille oder mehrere (je) ein Vorsprung auf der Innenseite des Koppelbereiches des Tragelementes eingreift.

Wenn die Nut / Rinne / Rille und/oder der Vorsprung im Querschnitt eine V-, U-, dachförmige oder polygonförmige Kontur besitzt und/oder beide (nahezu) spielfrei zusammenpassend ausgeformt sind, so ist ein wackelfreies Anpassen des Verstellelementes an das Tragelement und vice versa möglich.

Um die Verstellung auch stufenlos gestalten zu können, ist es von Vorteil, wenn der Vorsprung in der Nut / Rinne / Rille (kontinuierlich / diskontinuierlich) verschieblich / gleitbar eingebaut / eingesetzt ist.

Darüber hinaus hat es sich auch bewährt, wenn auf gegenüberliegenden Außenseiten des Verstellelementes vom Drehpunkt aus gesehen Nuten / Rinnen / Rillen vorhanden sind, von denen zwei mit je einem Vorsprung des Verstellelementes zumindest in einem Abschnitt ausgefüllt sind und wenigstens zwei oder ein ganzzahliges Vielfaches an Nuten / Rillen / Rinnen vorsprungsfrei bleiben.

Wenn die Nuten / Rinnen / Rillen gleichmäßig über den Innenumfang des Koppelbereiches verteilt sind, z. B. alle 90°, 45°, 22,5°, 12,25° oder 6,125°, so lassen sich bedarfsgerechte Verstellungen vorhalten.

Die Erfindung betrifft letztlich eine solche Ausgestaltung, bei der ein Spiegelkopf ausgebildet ist und/oder ein Kopfversteller oder ein Glasversteller umfasst ist.

Wenn der innere Kontaktbereich und/oder der äußere Kontaktbereich radial geschlossen ist und vorzugsweise elastische Teilbereiche besitzt, so wird bei Ausschluss von Verschmutzungsmöglichkeiten bzw. einem Vorhalten von einem Schmutzschutz eine einfache Montage ermöglicht.

Die Erfindung betrifft letztlich auch ein Montageverfahren zum Koppeln eines Tragelementes des indirekten Rücksichtsystems der erfindungsgemäßen Art an dem Verstellelement, wobei das Tragelement aus Richtung des Reflexionselementes in Richtung des Verstellelementes beispielsweise über einen dort ausgebildeten Gegenkontaktbereich bewegt wird / erfolgt. Ein Aufschnappen ist die Folge.

Eine Weiterbildung wird darin gesehen, dass der Koppelbereich ausbildend den zweiten Kontaktbereich und/oder den ersten Kontaktbereich beim Aufschieben auf das Verstellelement erst aufgeweitet wird und danach elastisch rückfedert.

Dabei ist es von Vorteil, wenn der Koppelbereich auf eine sphärische Verdickung / auf den balligen Anschlussbereich des Verstellelementes aufgeclipst wird.

Mit anderen Worten betrifft die Erfindung ein indirektes Sichtsystem für ein Fahrzeug, wobei der Winkel α zwischen einer horizontalen Kugelmittelachse und einem Schenkel des Kugelmittelpunkts zum Auftreffpunkt der Rückwand auf den Kontaktbereich von minimal 15° bis maximal 125° beträgt.

Eine Weiterbildung kann auch dadurch in Worte gefasst werden, dass das Verstellelement mit dem Anbindebereich zum Fahrzeug und in Wirkflächen zum Tragelement einstückig ausgebildet ist.

Darüber hinaus kann die Richtung der Rückwand im Bereich des Kontaktbereiches derart gestaltet sein, dass diese in einer theoretischen Verlängerung zum Kugelmittelpunkt hin eine theoretische Kugel von einem Durchmesser von 60 mm durchschneidet.

Als vorteilhaft wird auch gesehen, dass die Montage des Verstellelementes zum Tragelement aus Richtung des Reflexionselementes von innen nach außen erfolgt und der äußere Kontaktbereich und der innere Kontaktbereich radial geschlossen sind oder der äußere Kontaktbereich radial geschlossen ist und der innere Kontaktbereich elastische Teilbereiche aufweist. Hier bieten sich Schlitze, Freistellungen, Nuten und Wellformen an. Eine Segmentierung bzw. ein Umsetzen eines Druckknopfprinzips lässt sich dadurch einfacher bewerkstelligen. Die Schlitze bewirken dabei eine elastische Federwirkung des Kontaktbereiches.

Mit anderen Worten betrifft die Erfindung auch eine Montage des Verstellelementes zum Tragelement aus Richtung des Reflexionselementes von innen nach außen, wobei der äußere und innere Kontaktbereich des Tragelementes radial geschlossen ist und das Verstellelement elastische Teilbereiche aufweist.

Wenn an den äußeren oder inneren Kontaktbereichen des Tragelementes mittels eines Federelementes ein Druck auf die Kontaktbereiche des Verstellelementes aufgebracht wird, so wird mittels der Feder die Reibung erhöht, damit es eine höhere Verstellkraft für die Verstellung erzwingt.

Es ist von Vorteil, wenn an den äußeren oder inneren Kontaktbereichen des Verstellelementes mittels eines Federelements ein Druck auf die Kontaktbereiche des Tragelementes aufgebracht wird.

Dabei ist es von Vorteil, wenn das Federelement eine Metallfederklammer oder eine offene oder geschlossene Metallringfeder mit einer oder mehreren Windungen ist.

Auch ist es von Vorteil, wenn im äußeren Kontaktbereich des Tragelementes und dem äußeren Kontaktbereich des Verstellelementes eine Dichtfunktion integriert ist. Es sind angeformte Dichtlippen am Tragelement genauso denkbar, wie zusätzliche Dichtlippen mit einem zweiten Werkstoff, die angeformt sind. Auch sind zusätzliche Dichtelemente, welche montiert werden, denkbar.

Wenn das indirekte Sichtsystem mittels eines Rohres oder das Verstellelement am Fahrzeug direkt oder indirekt montiert ist und das Verstellelement einstückig oder mehrteilig ausgeführt ist, um das Rohr zu befestigen, so lassen sich weitere Alternativen realisieren. Dabei kann bei der direkten Montage ein Rohr am Fahrzeug montiert werden oder bei der indirekten Montage ein zusätzliches Halteelement, wie etwa ein Teleskopstangenhalter verwendet werden.

Es ist von Vorteil, wenn das Rohr im Verstellelement über Formschluss, also entsprechende geometrische Formen, eindeutig definiert, positioniert und fixiert ist. Dies hat den Vorteil, dass durch die eindeutige Positionierung des indirekten Sichtsystems ein gefordertes Sichtfeld, z. B. um Kundenanforderungen zu erfüllen oder gesetzliche Sichtfelder - wie bswp. die Normen UN/ECE-R46 oder ISO 5721-2 oder ISO 5006 fordern - immer eingehalten werden. Zudem ist der Spiegelkopf mit dem Verstellelement verliersicher angebracht und kann nicht "abfallen", falls der Kraftschluss verloren geht oder sich verringert.

Es ist auch von Vorteil, wenn das indirekte Sichtsystem über das Verstellelement am Fahrzeug direkt, bspw. über ein Verstellelement, was am Fahrzeug montiert ist, angebracht ist und das Verstellelement einstückig oder mehrteilig ausgeführt ist.

Auch ist es von Vorteil, wenn über eine Indexgeometrie zwischen dem Verstellelement und dem Tragelement, z. B. nach Art von Nut und Feder, radial um die horizontale Kugelmittelachse verschiedene Betriebspositionen zwischen dem Verstellelement und dem Tragelement einstellbar sind. Die Betriebspositionen können nach der Montage des Spiegelkopfes noch gewählt werden, da die Indexgeometrie elastisch ausgeführt ist. Hierdurch ist es auch möglich einen Kollisionsschutz durch Dämpfung und Nachgiebigkeit der Indexgeometrie zu erlangen.

Wie erläutert, ist es von Vorteil, wenn das indirekte Sichtsystem ein Spiegelkopf ist und/oder das indirekte Sichtsystem ein Kopfversteller oder Glasversteller ist.

Es zeigen sich bei der erfindungsgemäßen Lösung zahlreiche Vorteile. So stellt sich ein optimierter Kraftfluss vom Tragelement in das Verstellelement ein, da die Krafteinleitung zwischen dem inneren und äußeren Kontaktbereich stattfindet und so die Kraft besser aus dem Tragelement in das Verstellelement übertragen wird. Auch reduziert sich die Anzahl der Bauteile, da die Funktion und die geometrische Gestalt integriert sind. Die Kontaktbereiche des Tragelementes und des Verstellelements umschlingen sich und es ist kein zusätzliches Gleitelement oder Fügeelement erforderlich. Es stellt sich eine vereinfachte Montage ein, da weniger Bauteile benötigt werden. Hierdurch werden auch die Kosten reduziert. Der Verstellmechanismus muss in einer Ausführungsform nur noch "verschnappt" werden, und es ist kein Fügeelement wie eine Schraube oder ein Riegelbolzen mehr erforderlich.

Durch die Indexgeometrie nach Art einer Nut-und-Feder-Kombination, wird bei Aufbringen eines größeren Drehmoments eine Verstellung ermöglicht, etwa um von einer hochformatigen auf eine querformatige Anbringung zu wechseln.

Ein weiterer positiver Aspekt bezieht sich auf die Führung eines Elektrobabels, mit dem ein Anschluss elektrischer Module, wie Heizfolien bspw. auf der Spiegelrückseite (d.h. im Inneren des durch das Glaselement und das Tragelement begrenzten Raumes), Blindspot- und/oder Parkdistanz-Systeme, realisiert werden kann. Solche Elektrokabel / Versorgungsleitungen lassen sich dann durch das Innere des balligen Anschlussbereichs des Verstellelements bzw. der vom Verstellelement ausgebildeten Kugel führen.

Die Erfindung wird nachfolgend mit Hilfe einer Zeichnung näher erläutert, in welcher unterschiedliche Ausführungsformen dargestellt sind. Es zeigen:
- Fig. 1: eine Draufsicht auf ein Rücksichtsystem der erfindungsgemäßen Art mit Blick auf das Reflexionselement,
- Fig. 2: einen Längsschnitt entlang der Linie II durch das Rücksichtsystem aus Fig. 1,
- Fig. 3: das Rücksichtsystem gemäß einer Darstellung aus Fig. 2 mit dazu verändertem Verstellelement,
- Fig. 4: eine isometrische Ansicht auf das Rücksichtsystem aus Fig. 3 ohne Reflexionselement leicht schräg zur Montagerichtung,
- Fig. 5: das Rücksichtsystem aus Fig. 3 mit beidseitig einer gedachten Trennfläche vorhandenen Federelementen,
- Fig. 6: eine zur Fig. 5 veränderte Ausführungsform, bei der das Trennelement in einem zu der Ausführungsform nach Fig. 5 spitzeren Winkel im Bereich des Übergangs vom Hauptkörper des Trägerelements in den Koppelbereich aufweist,
- Fig. 7: eine zu den Ausführungsformen der Fign. 5 und 6 vergleichbare aber im Winkel und der Ausprägung des Hauptkörpers veränderte Ausführungsform,
- Fig. 8: eine zur Fig. 4 vergleichbare isometrische Ansicht auf eine andere Ausführungsform im Vergleich zu Fig. 5, nämlich ohne Schlitze im Tragelement,
- Fig. 9: die Ausführungsform gemäß Fig. 5 mit einem in dem Verstellelement vorhandenem Rohr,
- Fig. 10: eine Vergrößerung des Bereiches X aus Fig. 3,
- Fig. 11: eine Draufsicht auf eine erste Ausführungsform eines Federelementes, wie es in der Ausführungsform der Fig. 9 verwendet ist,
- Fig. 12: einen Schnitt durch das Federelement aus Fig. 11 entlang der Linie XII,
- Fig. 13: eine Variante eines Federelementes, wie es in den Fign. 11 und 12 gezeigt ist, in einer zur Fig. 11 vergleichbaren Darstellungsweise,
- Fig. 14: ein Schnitt entlang der Linie XIV durch das Federelement aus Fig. 13,
- Fig. 15: eine Vergrößerung des Bereiches XV durch die Ausführungsform aus Fig. 9 mit noch nicht angebauten Federelementen,
- Fig. 16: einen Längsschnitt entlang der Linie XVI durch die Ausführungsform aus Fig. 15,
- Fig. 17: eine perspektivische Darstellung auf ein zusammengebautes Rücksichtsystem,
- Fig. 18: einen Schnitt entlang der Linie XVIII durch die Ausführungsform aus Fig. 17,
- Fig. 19: einen Schnitt durch die Darstellung der Ausführungsform aus Fig. 18 entlang der Line XIX.
- Fig. 20: eine Frontansicht auf einen Kopfversteller des Rücksichtsystems gemäß der Erfindung,
- Fig. 21: eine singuläre Darstellung auf einen Glasversteller gemäß der Erfindung,
- Fig. 22: eine Hochansicht zur Fig. 20,
- Fig. 23: eine Hochansicht zur Fig. 21 auf das zusammengebaute Rücksichtsystem gemäß der Erfindung und
- Fig. 24: eine weitere Ausführungsform in einer den Figuren 5 bis 7 entsprechenden Darstellungsart.

Die Figuren sind lediglich schematischer Natur und dienen nur dem Verständnis der Erfindung. Die gleichen Elemente sind mit denselben Bezugszeichen versehen. Merkmale der einzelnen Ausführungsformen können untereinander ausgetauscht werden.

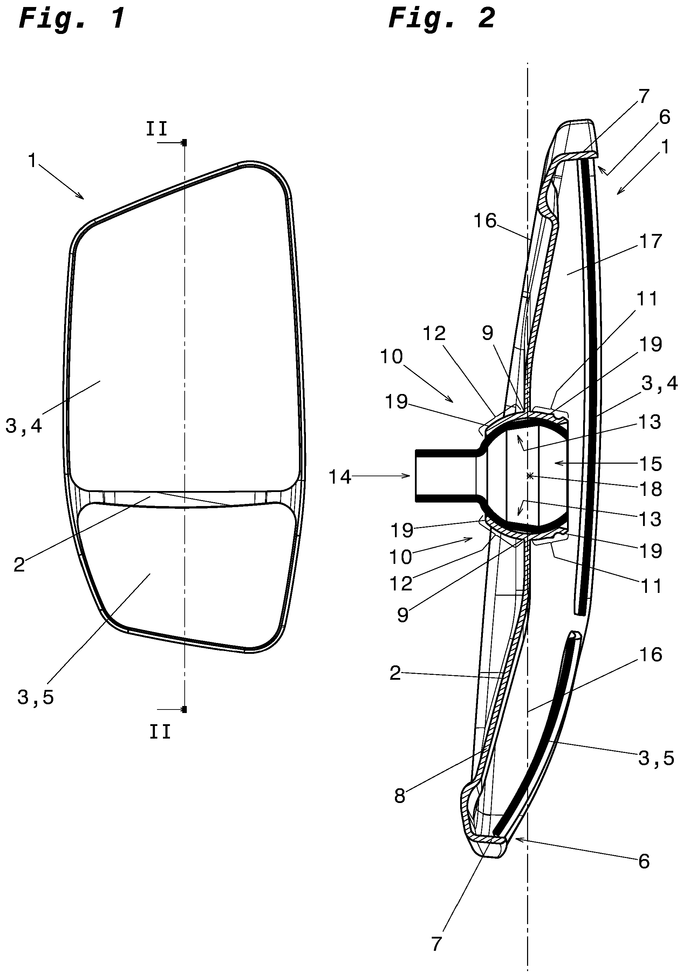

In Fig. 1 ist eine Draufsicht von der Rückseite eines Fahrzeuges auf eine erste Ausführungsform eines indirekten Rücksichtsystems 1 dargestellt. An einem Tragelement 2 sind zwei Reflexionselemente 3, nämlich ein oberes Spiegelglas 4 und ein unteres Spiegelglas 5 angebracht.

Die Anbringung der beiden Reflexionselemente 3 an dem Tragelement 2 ist in der Längsschnittdarstellung gemäß Fig. 2 näher dargestellt.

Das Tragelement 2 bietet eine Befestigung 6 an den äußeren Enden 7. Von diesen äußeren Enden 7 erstreckt sich das Tragelement 7 mit seinem Hauptkörper 8 bis zu einem Bereich eines Übergangs 9. Der Hauptkörper 8 geht dort in einen Koppelbereich 10 über. Der Koppelbereich 10 besitzt einen ersten Kontaktbereich 11 und einen zweiten Kontaktbereich 12. Der Koppelbereich 10 mit seinem ersten Kontaktbereich 11 und seinem zweiten Kontaktbereich 12 umgibt einen ballig ausgebildeten Anschlussbereich 13 eines Verstellelementes 14. Die Axialrichtung, in welcher das Aufsetzen des Koppelbereichs 10 auf den Anschlussbereich 13 stattfindet, ist mit dem Bezugszeichen 15 versehen.

Eine gedachte Trennfläche 16 - hier als Trennebene - verläuft durch die Bereiche des Übergangs 9, also genau durch jenen Bereich 9 des Übergangs, an welchem der Hauptkörper 8 in den Koppelbereich 10 übergeht.

Für das Verständnis der Trennfläche 16 ist es bedeutsam, dass bei bestimmten - aber nicht zwingend allen - Schnitten durch einen Drehpunkt 18, um den das Tragelement 2 relativ zum Verstellelement 14 verschwenkbar ist, die Trennfläche 16 gedachte Geraden durch die Bereiche 9 des Übergangs vom Hauptkörper 8 in den Koppelbereich 10 aufnimmt.

Wenn der Bereich 9 des Übergangs 9 um die Achse 24 rotationssymmetrisch ausgestaltet ist, so kann sich in einem bestimmten Spezialfall eine Trennfläche 16 nach Art einer Trennebene ergeben, die in allen Winkellagen Geraden durch alle Bereiche 9 des besagten Übergangs aufnimmt.

Dies muss aber nicht immer so sein, beispielsweise, wenn der Bereich 9 des Übergangs sich in Richtung der Achse 24 erstreckende Vorsprünge / Nasen / Sicken bzw. Rücksprünge / Vertiefungen aufweist, welche erst in unterschiedlichen Querschnitten zweidimensional erkennbar wären.

Der erste Kontaktbereich 11 ist dabei ein innerer Kontaktbereich, da er in einem durch das Tragelement 2 und die beiden Reflexionselemente 3 gebildeten Raum 17 angeordnet ist. Außerhalb dieses Raumes 17, auf der anderen Seite der gedachten Trennfläche 16 (vom ersten Kontaktbereich 11 aus gesehen), befindet sich der zweite Kontaktbereich 12, der ein äußerer Kontaktbereich ist.

Die beiden Kontaktbereiche 11 und 12 besitzen kugelabschnittsartige Innenkontursegmente, welche in flächigem oder linienförmigem Kontakt mit einem kugelabschnittsförmigen Abschnitt (jeweils) des Anschlussbereichs 13 stehen.

Das Tragelement 2, umfassend den Hauptkörper 8 und den Koppelbereich 10, ist aus Kunststoff, vorzugsweise mittels Spritzgussverfahren hergestellt und hat eine überwiegend gleichmäßige Wandstärke. Der sphärische, kugelartige oder Kugelabschnittsbereiche aufweisende Anschlussbereich 13 umgibt den Drehpunkt 18. Beim Verstellen des Reflexionselementes, bewegt sich der erste Kontaktbereich 11 sowie der zweite Kontaktbereich 12 (gemeinsam), die Teil des Koppelbereiches 10 sind und über den Bereich des Übergangs 9 am Hauptkörper 8 des Tragelementes 2 fest angebracht sind, schleifend auf der Außenoberfläche von Gegenkontaktbereichen 19. Diese Gegenkontaktbereiche 19 sind auf derselben Höhe wie die beiden Kontaktbereiche 11 und 12 vorhanden, gehören jedoch zum Verstellelement 14.

Das Tragelement 2 fungiert grundsätzlich als Rückwand.

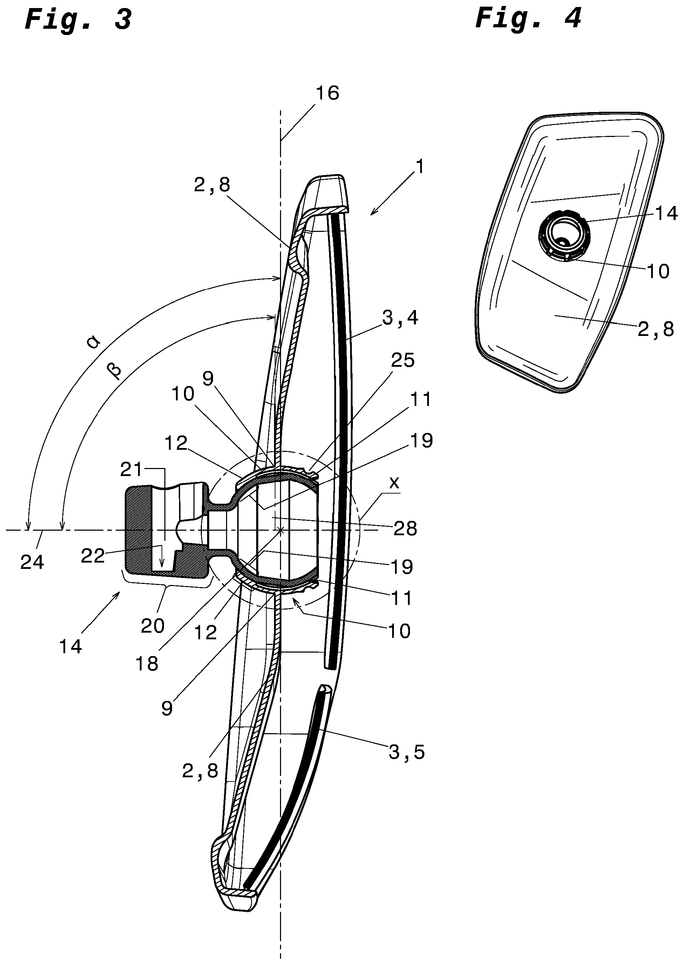

Eine Weiterbildung des Verstellelementes 14 ist in Fig. 3 dargestellt. Dort besitzt das Verstellelement 14 eine Aufnahme 20 mit einem Sackloch 21. Der Boden 22 des Sackloches 21 ist stufig ausgebildet.

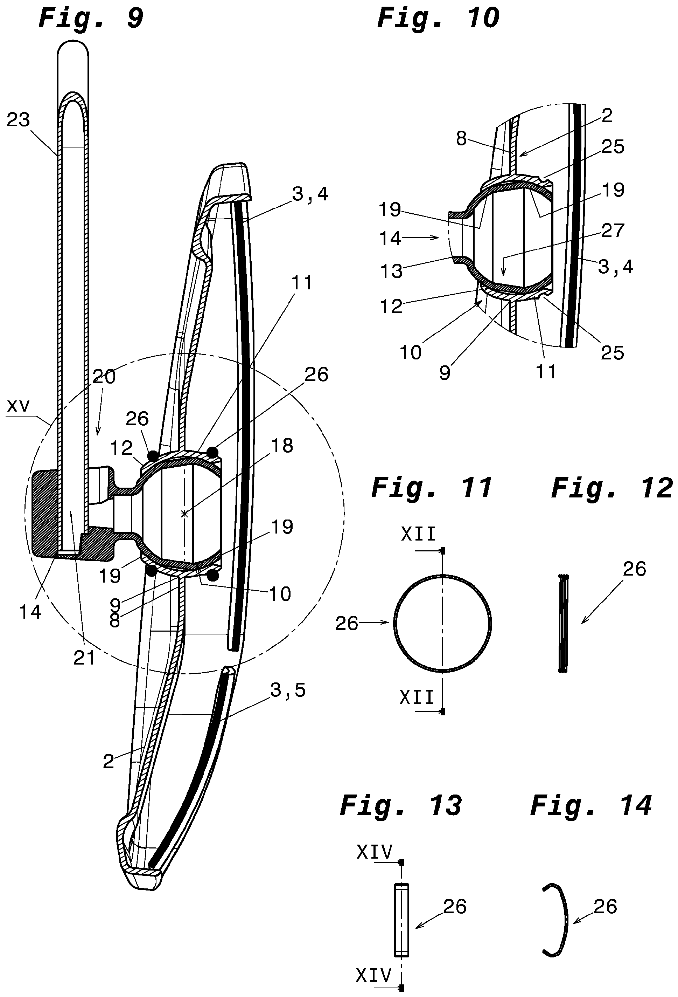

Unter Vorgriff auf Fig. 9 sei bereits die Einsteckmöglichkeit eines Rohres 23 in jenes Sackloch 21 erwähnt. Das Rohr 23 kann auch eine Stange, ein Teleskoprohr oder eine Teleskopstange sein. Auch das Verstellelement 14 ist aus Kunststoff gefertigt, insbesondere mittels Spritzgussverfahren, und ist innen hohl ausgestaltet.

Der Hauptkörper 8 trifft an einer speziellen Stelle auf den Koppelbereich 10, nämlich im Bereich des Übergangs 9 des Hauptkörpers 8 in den Koppelbereich 10. Verlängert man diese Stelle theoretisch mit dem Drehpunkt 18, so kann dazu ein Winkel zu einer gedachten horizontalen Gerade 24 durch den Drehpunkt 18 gemessen werden. Dieser Winkel wird mit α bezeichnet. Er kann zwischen 15° bis 125° betragen. In der Ausführungsform der Fig. 3 beträgt er exakt 90°. In dieser Ausführungsform liegt die besagte spezielle Stelle nämlich in der Trennfläche 16 und somit auch der eine Schenkel des Winkels α. Mit anderen Worten liegt in der gedachten Trennfläche 16 jener koppelbereichnächste Abschnitt des Hauptkörpers 8.

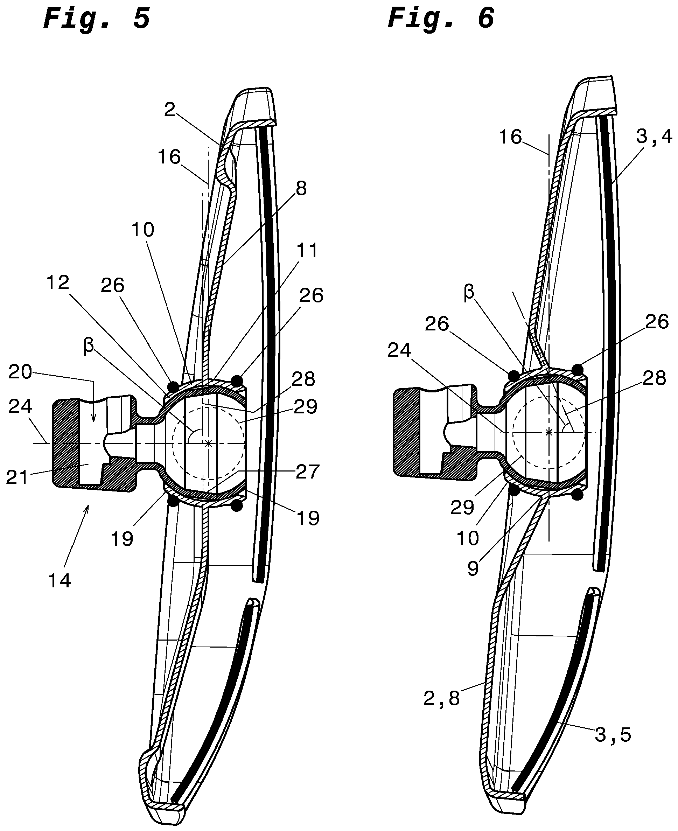

Der Hauptkörper 8 trifft darüber hinaus in einem speziellen Winkel relativ zu einer gedachten horizontalen Gerade 24 auf den Koppelbereich 10. Verlängert man den auf den im Bereich des Übergangs 9 auf den Koppelbereich 20 treffenden Hauptkörper 8, so erhält man eine Verlängerung bzw. gedachte Peillinie 28. Relativ zu der gedachten Geraden 24 stellt sich dazu ein weiterer Winkel ein. Dieser Winkel wird als Winkel β bezeichnet und kann zwischen 15° bis 125° betragen. In der Ausführungsform der Fig. 3 beträgt er exakt 90°. In der Ausführungsform der Figur 5 beträgt sowohl der Winkel α als auch der Winkel β 90°. In der Ausführungsform der Figur 6 beträgt der Winkel α 90° und der Winkel β 66°.

In der Ausführungsform der Figur 5 ist eine Mulde / Nut / Rinne / Rille 25 auf der verstellelementfernen Oberfläche des ersten Kontaktbereiches 11 eingearbeitet, um einen guten Sitz für ein Federelement 26 zu bieten. Dort ist auch ein zweites Federelement 26, das baugleich zu dem in der Nut / Rinne / Rille 25 eingesetzten Federelement 26 ist oder unterschiedlich dazu ausgebildet ist, vorhanden.

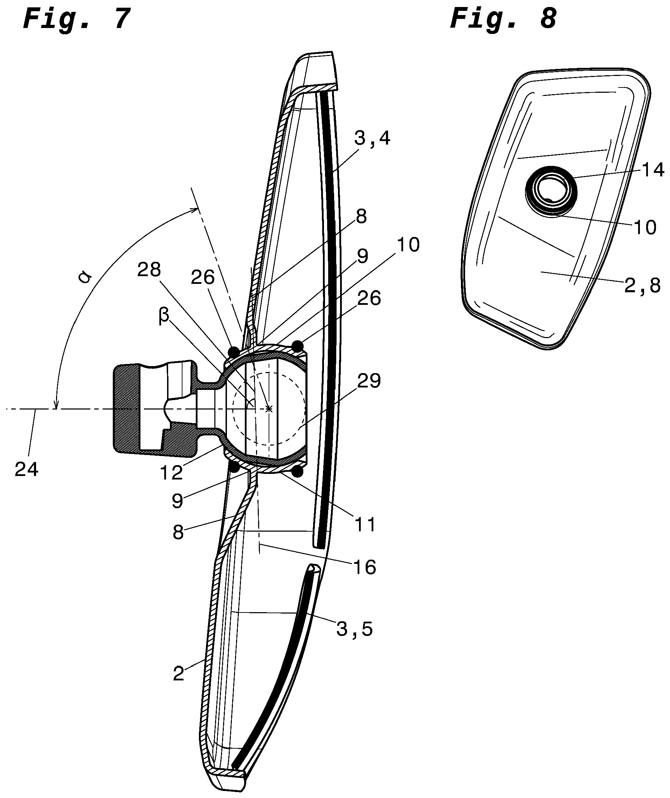

Die beiden Gegenkontaktbereiche 19 sind über einen Abplattungsbereich bzw. eine Abplattung 27 miteinander verbunden. Eine gedachte Verlängerung 28 des Hauptkörpers 8 in den Koppelbereich 10 schneidet dabei eine gedachte Kugel 29, mit einem Durchmesser von 50 mm, 60 mm oder 70 mm. Die gedachte Verlängerung 28 entspricht einer Peillinie. Die gedachte Kugel 29 ist somit eine theoretische Kugel. Das Zusammenwirken des Verstellelements 14 mit dem Koppelbereich 10 des Tragelementes 2 ist bei Weglassen des oberen und unteren Spiegelglases 4 und 5 in der Darstellung der Fig. 8 gut zu erkennen.

Abweichend von der Ausführungsform nach Fig. 5 kann der Winkel α sowie der Winkel β auch anders gewählt werden.

Beispielsweise ist der Winkel β in der Fig. 6 ca. 66° oder 70°, also ein spitzer Winkel. Der Winkel α in der Ausführungsform gemäß Fig. 7 ist ca. 85°, also auch ein spitzer Winkel. Es sind jedoch auch stumpfe Winkel denkbar. Beispielsweise sind 100°, 110°, 120° genauso denkbar.

Die in der Ausführungsform der Fig. 9 verwendeten Federelemente 26 sind exemplarisch in den Fign. 11 bis 14 dargestellt. Dabei ist das Federelement 26 der Fign. 13 und 14 klammerartig und der Fign. 11 und 12 ringartig ausgebildet. Insbesondere ist das Federelement 26 ein einfach oder mehrfach gewundener Federring.

Die Vergrößerung der Fig. 10 lässt den Kraftschluss zwischen den Gegenkontaktbereichen 19 einerseits und den beiden Kontaktbereichen 11 und 12 andererseits gut erkennen. Die dafür notwendige Kraft wird durch die Steifigkeit des Materials des Tragelementes 2 einerseits und die Federelemente 26 andererseits gestellt.

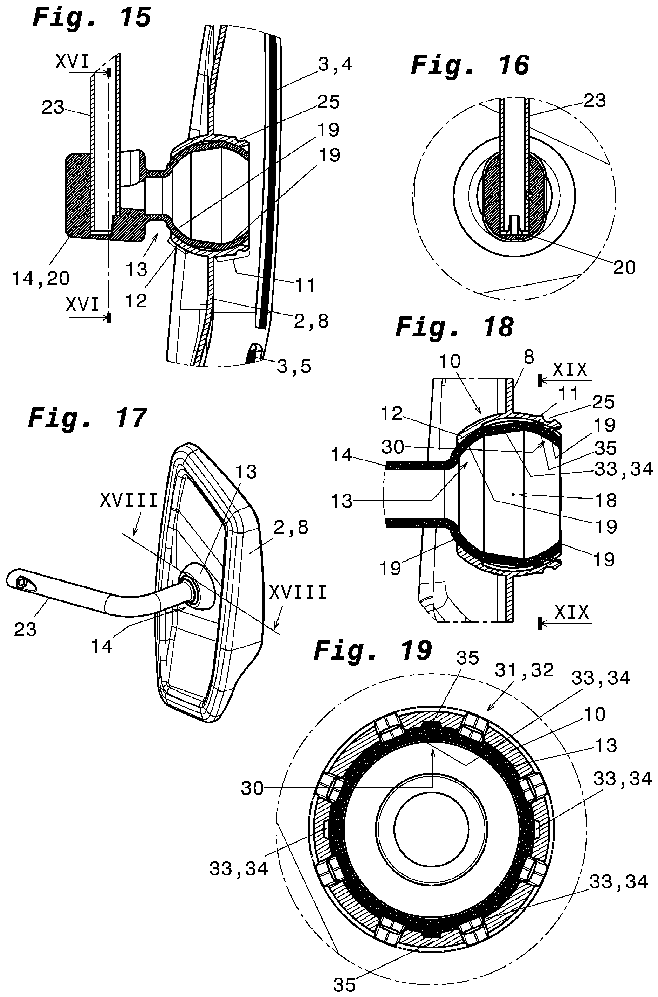

Die Fign. 15 und 16 zeigen die Verbindung des Rohres 23 an der Aufnahme 20 des Verstellelementes 14 in unterschiedlichen Längsschnitten. Der Gesamtaufbau ist der Fig. 17 zu entnehmen, wohingegen eine Indexgeometrie 30 in vergrößerter Darstellung in den Fign. 18 und 19 zu entnehmen ist.

Dabei gibt es Elastizität hervorrufende Baumaßnahmen 31 in dem ersten Kontaktbereich 11, nämlich Schlitze 32. Auf der Innenseite des Koppelbereiches 10 gibt es Führungsmaßnahmen, in Form von Nuten / Rinnen / Rillen 34. Diese Nuten 34 sind über den Umfang gesehen um 90° versetzt und die in Schwerkraftrichtung oberen und unteren Nuten 34 sind an einer Stelle / einem querschnittsüberspannendem Segment unter Freilassung von daran anschließenden Segmenten durch Vorsprünge 35 formschlüssig ausgefüllt.

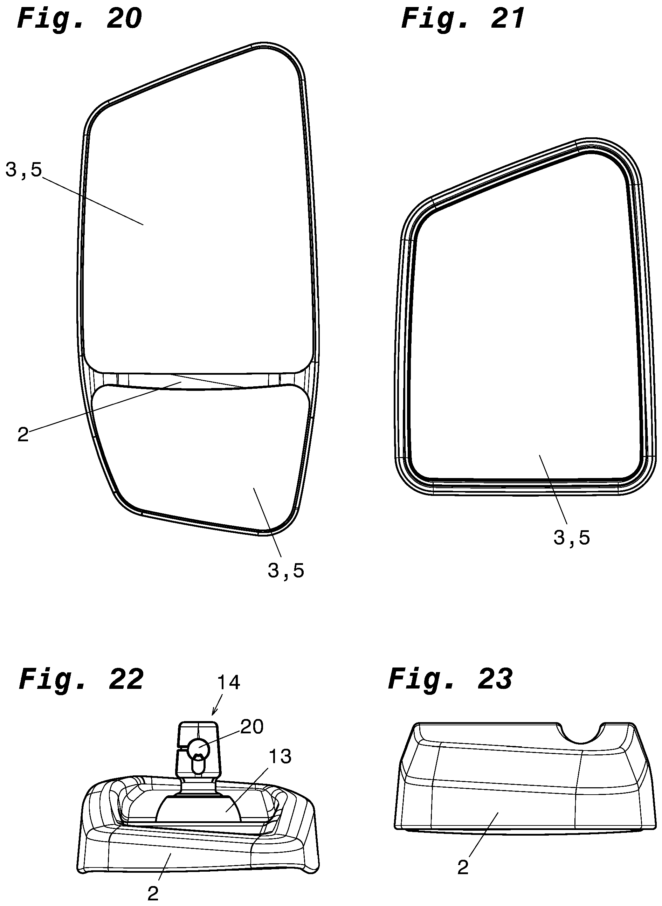

Die Fign. 20 bis 23 komplettieren die geometrische Gesamtzusammenschau.

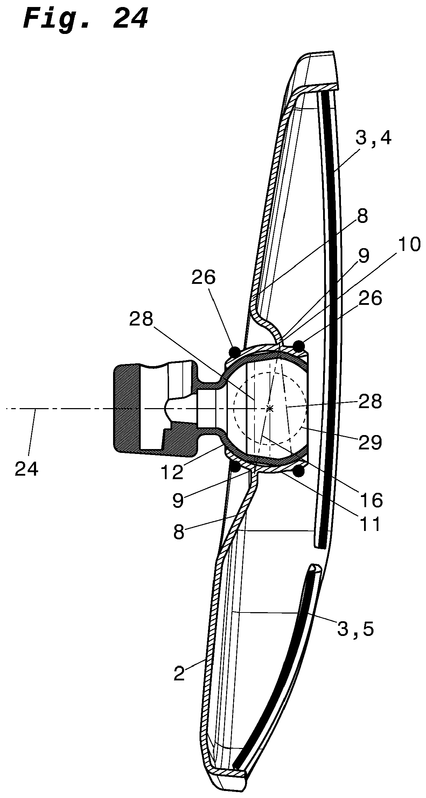

In der Figur 24 ist eine weitere Ausführungsform dargestellt, wobei die Trennfläche 16 schräg zur gedachten Gerade 24 verläuft. Die gedachten Verlängerungen / Peillinien 28 sind nicht parallel zu einander. Vielmehr entfernt sich die von dem oberen (d.h. oberhalb der gedachten Geraden 24) Bereich des Übergangs 10 abgehende gedachte Verlängerung / Peillinie 28 vom unterhalb der gedachten Gerade 24 vorhanden Teil des Tragelementes 7. Verbindet man jeden Punkt des Bereichs 10 durch die gedachte Gerade 24 hindurch mit dem gegenüberliegenden Bereich 10 so ergibt sich in dieser nicht beanspruchten Ausführungsform eine Trennebene, die nicht durch den Drehpunkt 18 verläuft aber in anderen Ausführungsformen laufen könnte. Auch ist die Ausbildung der Trennfläche 16 als Trennebene zwar hier realisiert, kann aber auch alternativ in nicht beanspruchten Ausführungsformen gerade nicht nach Art einer Ebene sondern nach Art einer Freifläche sein.

### Bezugszeichenliste

- 1: indirektes Rücksichtsystem
- 2: Tragelement
- 3: Reflexionselement
- 4: oberes Spiegelglas
- 5.: unteres Spiegelglas
- 6: Befestigung
- 7: äußeres Ende des Tragelementes
- 8: Hauptkörper
- 9: Bereich eines Übergangs
- 10: Koppelbereich
- 11: erster Kontaktbereich
- 12: zweiter Kontaktbereich
- 13: balliger Anschlussbereich
- 14: Verstellelement
- 15: Axialrichtung / Montagerichtung
- 16: gedachte Trennfläche
- 17: Raum
- 18: Drehpunkt
- 19: Gegenkontaktbereich
- 20: Aufnahme
- 21: Sackloch
- 22: Boden
- 23: Rohr
- 24: gedachte Gerade
- 25: Mulde / Nut / Rinne / Rille
- 26: Federelement
- 27: Abplattungsbereich / Abplattung
- 28: gedachte Verlängerung / Peillinie
- 29: gedachte Kugel / theoretische Kugel
- 30: Indexgeometrie
- 31: Baumaßnahme
- 32: Schlitz
- 33: Führungsmaßnahme
- 34: Nut / Rinne / Rille
- 35: Vorsprung

## Patentansprüche

1. Indirektes Rücksichtsystem (1) für ein Kraftfahrzeug, mit einem als integrales, einmaterialiges Bauteil ausgebildeten Tragelement (2) zum Befestigen wenigstens eines Reflexionselementes (3), wobei das Tragelement (2) einen Koppelbereich (10) zum lageveränderbaren Anbringen an einem fahrzeuganbindbaren Verstellelement (14) ausbildet, wobei der Koppelbereich (10) zum Kontaktieren eines balligen Anschlussbereiches (13) des Verstellelementes (14) einen ersten Kontaktbereich (11) und einen dazu axial versetzten zweiten Kontaktbereich (12) besitzt, wobei beiderseits eines Drehpunktes (18), um den das Tragelement (2) relativ zu dem Verstellelement (14) verschwenkbar ist, durch einen Bereich eines Übergangs (9) eines Hauptkörpers (8) des Tragelementes (2) in den Koppelbereich (10) des Tragelementes (2) eine gedachte Trennfläche (16) in Form einer Trennebene verläuft, **dadurch gekennzeichnet, dass** der erste Kontaktbereich (11) auf der einen Seite der gedachten Trennfläche (16) angeordnet ist und der zweite Kontaktbereich (12) auf der gegenüberliegenden anderen Seite der gedachten Trennfläche (16) angeordnet ist.

2. Indirektes Rücksichtsystem (1) nach Anspruch 1, **dadurch gekennzeichnet, dass** der erste Kontaktbereich (11) als ein innerer Kontaktbereich ausgebildet ist, der im Inneren eines durch das Tragelement (2) und das Reflexionselement (3) definierten Raum (17) liegt und der zweite Kontaktbereich (12) als ein äußerer Kontaktbereich ausgebildet ist.

3. Indirektes Rücksichtsystem (1) nach Anspruch 1 oder 2, **dadurch gekennzeichnet, dass** der erste Kontaktbereich (11) und der zweite Kontaktbereich (12) jeweils kugelabschnittsartige Innenkontursegmente besitzen.

4. Indirektes Rücksichtsystem (1) nach einem der Ansprüche 1 bis 3, **dadurch gekennzeichnet, dass** die Innenseite des Koppelbereichs (10) und die Außenseite des Anschlussbereiches (13) so aufeinander abgestimmt sind, dass durch beide Bauteile der Drehpunkt (18) definiert ist, um den das Tragelement (2) relativ zum Verstellelement (14) verschwenkbar ist.

5. Indirektes Rücksichtsystem (1) nach einem der Ansprüche 1 bis 4, **dadurch gekennzeichnet, dass** der Anschlussbereich (13) kugelabschnittsartige Gegenkontaktbereiche (19) besitzt.

6. Indirektes Rücksichtsystem (1) nach einem der Ansprüche 1 bis 5, **dadurch gekennzeichnet, dass** die beiden Kontaktbereiche (11 und 12) gemeinsam eine kugelabschnittsartige Schale ausbilden, die im Bereich des Übergangs (9) in den Hauptkörper (8) münden / übergehen und/oder zwischen einem der Kontaktbereiche (11, 12) und dem ihm zugeordneten Gegenkontaktbereich (19) eine Dichtfunktion realisiert ist.

7. Indirektes Rücksichtsystem (1) nach einem der Ansprüche 1 bis 6, **dadurch gekennzeichnet, dass** ein Winkel α und/oder ein Winkel β von 15° bis 125° +/-5° vorliegt.

8. Indirektes Rücksichtsystem (1) nach einem der Ansprüche 1 bis 7, **dadurch gekennzeichnet, dass** an einem der beiden Kontaktbereiche (11, 12) oder beiden Kontaktbereichen (11 und 12) im montierten Zustand eine Federkraft anliegt, die in den Koppelbereich (10) zumindest im jeweiligen Kontaktbereich (11, 12) in Richtung des Koppelbereichinneren drängt.

9. Indirektes Rücksichtsystem (1) nach einem der vorhergehenden Ansprüche, **dadurch gekennzeichnet, dass** der Hauptkörper (8) in Richtung des Drehpunktes (18) eine gedachte Peillinie (28) vorgibt, die eine theoretische Kugel (29) um den Drehpunkt (18) mit einem Durchmesser kleiner oder gleich ca. 60 mm schneidet.

10. Montageverfahren zum Koppeln eines Tragelementes (2) des indirekten Rücksichtsystems (1) nach einem der vorhergehenden Ansprüche an dem Verstellelement (14), wobei das Tragelement (2) aus Richtung des Reflexionselementes (3) in Richtung des Verstellelementes (14) bewegt wird.

## Claims

1. An indirect rear-view system (1) for a motor vehicle, comprising a supporting element (2), which is configured as an integral, single-material component, for fastening at least one reflection element (3), wherein the supporting element (2) forms a coupling region (10) for positionally variable attachment to an adjusting element (14) which can be connected to the vehicle, wherein the coupling region (10) has a first contact region (11) and a second contact region (12), which is axially offset with respect thereto, for contacting a convex connection region (13) of the adjusting element (14), wherein an imaginary separating surface (16) in the form of a separating plane runs through a region of a transition (9) of a main body (8) of the supporting element (2) into the coupling region (10) of the supporting element (2) on both sides of a pivot point (18) about which the supporting element (2) can be pivoted relative to the adjusting element (14), **characterized in that** the first contact region (11) is arranged on one side of the imaginary separating surface (16) and the second contact region (12) is arranged on the opposite, other side of the imaginary separating surface (16).

2. The indirect rear-view system (1) according to Claim 1, **characterized in that** the first contact region (11) is configured as an inner contact region which lies in the interior of a space (17) which is defined by the supporting element (2) and the reflection element (3), and the second contact region (12) is configured as an outer contact region.

3. The indirect rear-view system (1) according to Claim 1 or 2, **characterized in that** the first contact region (11) and the second contact region (12) have in each case spherical-segment-like inner contour segments.

4. The indirect rear-view system (1) according to one of Claims 1 to 3, **characterized in that** the inner side of the coupling region (10) and the outer side of the connection region (13) are coordinated with each other such that the pivot point (18) about which the supporting element (2) can be pivoted relative to the adjusting element (14) is defined by both components.

5. The indirect rear-view system (1) according to one of Claims 1 to 4, **characterized in that** the connection region (13) has spherical-segment-like mating contact regions (19).

6. The indirect rear-view system (1) according to one of Claims 1 to 5, **characterized in that** the two contact regions (11 and 12) jointly form a spherical-segment-like shell which open/merge into the main body (8) in the region of the transition (9), and/or a sealing function is realized between one of the contact regions (11, 12) and the mating contact region (19) which is assigned thereto.

7. The indirect rear-view system (1) according to one of Claims 1 to 6, **characterized in that** an angle α and/or an angle β of 15° to 125° +/- 5° is/are present.

8. The indirect rear-view system (1) according to one of Claims 1 to 7, **characterized in that** a spring force, which pushes into the coupling region (10) at least in the respective contact region (11, 12) in the direction of the coupling-region interior, bears against one of the two contact regions (11, 12) or against both contact regions (11 and 12) in the mounted state.

9. The indirect rear-view system (1) according to one of the preceding claims, **characterized in that** the main body (8) predefines an imaginary bearing line (28) in the direction of the pivot point (18) and which intersects a theoretical sphere (29) with a diameter of less than or equal to approximately 60 mm about the pivot point (18).

10. A mounting method for coupling a supporting element (2) of the indirect rear-view system (1) according to one of the preceding claims to the adjusting element (14), wherein the supporting element (2) is moved from the direction of the reflection element (3) in the direction of the adjusting element (14).

## Revendications

1. Système de recul (1) indirect pour un véhicule automobile, avec un élément porteur (2) configuré comme un composant d'un seul tenant à un matériau pour la fixation d'au moins un élément de réflexion (3), dans lequel l'élément porteur (2) configure une zone de couplage (10) pour le montage à position variable au niveau d'un élément de réglage (14) pouvant être relié au véhicule, dans lequel la zone de couplage (10) possède pour la mise en contact d'une zone de raccordement (13) bombée de l'élément de réglage (14) une première zone de contact (11) et une seconde zone de contact (12) décalée axialement par rapport à celle-ci, dans lequel une surface de séparation (16) imaginaire sous la forme d'un plan de séparation des deux côtés d'un point de rotation (18) autour duquel l'élément porteur (2) peut être pivoté par rapport à l'élément de réglage (14) s'étend à travers une zone d'une transition (9) d'un corps principal (8) de l'élément porteur (2) dans la zone de couplage (10) de l'élément porteur (2), **caractérisé en ce que** la première zone de contact (11) est agencée sur l'un côté de la surface de séparation imaginaire (16) et la seconde zone de contact (12) est agencée sur l'autre côté opposé de la surface de séparation imaginaire (16).

2. Système de recul (1) indirect selon la revendication 1, **caractérisé en ce que** la première zone de contact (11) est configurée comme une zone de contact intérieure qui se trouve à l'intérieur d'un espace (17) défini par l'élément porteur (2) et l'élément de réflexion (3), et la seconde zone de contact (12) est configurée comme une zone de contact extérieure.

3. Système de recul (1) indirect selon la revendication 1 ou 2, **caractérisé en ce que** la première zone de contact (11) et la seconde zone de contact (12) possèdent respectivement des segments de contour intérieur de type section sphérique.

4. Système de recul (1) indirect selon l'une quelconque des revendications 1 à 3, **caractérisé en ce que** le côté intérieur de la zone de couplage (10) et le côté extérieur de la zone de raccordement (13) sont adaptés l'un à l'autre de sorte que le point de rotation (18) soit défini par les deux composants, autour duquel l'élément porteur (2) peut être pivoté par rapport à l'élément de réglage (14).

5. Système de recul (1) indirect selon l'une quelconque des revendications 1 à 4, **caractérisé en ce que** la zone de raccordement (13) possède des zones de contre-contact (19) de type section sphérique.

6. Système de recul (1) indirect selon l'une quelconque des revendications 1 à 5, **caractérisé en ce que** les deux zones de contact (11 et 12) configurent ensemble une coque de type section sphérique qui débouchent/passent dans la zone de la transition (9) dans le corps principal (8) et/ou une fonction étanche est réalisée entre une des zones de contact (11, 12) et la zone de contre-contact (19) qui lui est associée.

7. Système de recul (1) indirect selon l'une quelconque des revendications 1 à 6, **caractérisé en ce qu'il** existe un angle α et/ou un angle ß de 15° à 125° +/- 5°.

8. Système de recul (1) indirect selon l'une quelconque des revendications 1 à 7, **caractérisé en ce qu'une** force de ressort est appliquée à l'état monté au niveau d'une des deux zones de contact (11, 12) ou des deux zones de contact (11 et 12), laquelle force pousse dans la zone de couplage (10) au moins dans la zone de contact (11, 12) respective dans la direction de l'intérieur de zone de couplage.

9. Système de recul (1) indirect selon l'une quelconque des revendications précédentes, **caractérisé en ce que** le corps principal (8) prédéfinit en direction du point de rotation (18) une ligne de relèvement (28) imaginaire qui coupe une sphère (29) théorique autour du point de rotation (18) avec un diamètre inférieur ou égal à environ 60 mm.

10. Procédé de montage pour le couplage d'un élément porteur (2) du système de recul (1) indirect selon l'une quelconque des revendications précédentes au niveau de l'élément de réglage (14), dans lequel l'élément porteur (2) est déplacé de la direction de l'élément de réflexion (3) dans la direction de l'élément de réglage (14).
